Europäisches Patentamt

European Patent Office

Office européen des brevets

(11) Veröffentlichungsnummer: **0 030 247**
**A1**

## (12) EUROPÄISCHE PATENTANMELDUNG

(21) Anmeldenummer: 79105018.0

(22) Anmeldetag: 10.12.79

(51) Int. Cl.³: **B 29 C 1/16,** B 28 B 7/02, A 63 H 33/00

(43) Veröffentlichungstag der Anmeldung: 17.06.81
Patentblatt 81/24

(71) Anmelder: **T.R.-Plast Kunststoffverarbeitung Inh. Theo Rosbach, Karl-Spitta-Strasse 2, D-8430 Neumarkt Opf. (DE)**

(72) Erfinder: **Rosbach, Hannelore, Karl-Spitta-Strasse 2, D-8430 Neumarkt/Opf. (DE)**

(84) Benannte Vertragsstaaten: **AT BE CH DE FR GB IT LU NL SE**

(74) Vertreter: **Göbel, Matthias, Pruppacher Hauptstrasse 5-7, D-8501 Pyrbaum-Pruppach (DE)**

(54) **Vorrichtung zum Ausformen von Spielbauelementen.**

(57)  Bei der Vorrichtung zum Ausformen von Spielbauelementen aus erhärt- oder polymerisierbaren Werkstoffen für Bauspiele sind auf einer Grundplatte (1) verstellbar fest im Abstand parallel zueinander Klemmschienen (2) angeordnet. Zwischen den Klemmschienen (2) sind auf der Grundplatte (1) Endstücke (9, 10) oder Formstücke (11, 12, 13, 14, 15, 20) frei aufgelegt, die durch die Klemmschienen (2) auf der Grundplatte (1) freigebbar fixiert sind.

**M. GÖBEL**
PATENT- U. ZIV.-INGENIEUR

8501 PYRBAUM-PRUPPACH
PRUPPACHER HAUPTSTRASSE 5-7
TELEFON 091802 / 675

BANKKONTEN:
VOLKSBANK NÜRNBERG 45 2 33 BLZ 760 90 00 0
COMMERZBANK NÜRNBERG 8 300 907 BLZ 760 400 61

– 1 –

DiDi Spielwaren GmbH,   D 8430 Neumarkt Opf.

Vorrichtung zum Ausformen von Spielbauelementen

Die Erfindung betrifft eine Vorrichtung zum Ausformen von Spielbauelementen aus erhärt- oder polymerisierbaren Werkstoffen für Bauspiele.

Es ist bereits bekannt, zu Spielzwecken benutzte Bauelemente in ein- oder mehrteiligen Formkästen auszuformen. Die Formkästen weisen den Nachteil auf, daß sie Veränderungen hinsichtlich Größe und Gestaltung an den Spielbauelementen nicht oder nur umständlich zulassen.

Aufgabe der Erfindung ist die Schaffung einer Vorrichtung, die nach Form und/oder Größe beliebige Spielbauelemente auszuformen erlaubt.

Erfindungsgemäß hat diese Aufgabe eine Lösung gefunden durch eine Grundplatte mit auf dieser verstellbar fest, im Abstand

–/2

- 2 -

parallel zueinander angeordneten Klemmschienen und zwischen diesen auf der Grundplatte frei aufgelegten End- oder Formstücken, die durch die Klemmschienen auf der Grundplatte freigebbar fixiert sind. Bei der Vorrichtung bilden die Klemmschienen zusammen mit den End- oder Formstücken verstell- feststellbare Formwände zur Schaffung von Formkästen mit beliebigen Größen und Gestaltungen. Durch Verstellen der Klemmschienen und der End- bzw. Formstücke bzw. durch die Zuordnung entsprechender End- und Formstücke sind verkleinerte Nachbildungen der Bauelemente der Großbautechnik mit beliebigem Maßstab reproduzierbar zu erreichen.

Die wahlweise mit gleichen oder verschieden großen Breiten und/oder Höhen ausgebildeten Klemmschienen können beliebig auf der Grundplatte geführt und gehalten sein. Gemäß einer bevorzugten Ausgestaltung der Vorrichtung ist vorgesehen, daß die Klemmschienen durch an der Grundplatte geführte Kulissenschieber auf der Grundplatte verstell- und feststellbar sind, wozu die Klemmschienen, z.B. mit klemmschienenfesten Halte- und Führungsstiften in Lochungen der Grundplatte eingreifen, die Haltestifte die Kulissennut der Kulissenschieber durchgreifen und mit Verbreiterungen die Begrenzungsflächen der Kulissennuten untergreifen. Es be-

-/3

- 3 -

steht aber auch die Möglichkeit, im Rahmen der Erfindung, die Klemmschienen in anderer Weise, etwa durch Rastenkörper oder Klemmglieder, z.B. Schrauben, an der Grundplatte verstellbar zu halten. Die Grundplatte selbst kann dabei gleicher-maßen durch einen ebenen Vollkörper oder einen, z.B. unterseitig offenen Hohlkörper gebildet sein. Zweckmäßig weist die Grundplatte zur Verbesserung der Handhabung der Vorrichtung über die Umfangsfläche derselben vorstehende Griffe oder Griffleisten auf.

Es entspricht dem Erfindungsgedanken, daß die Verwendung unterschiedlicher End- und Formstücke verschiedene Spielbauelemente auszuformen erlaubt. So können die Endstücke durch als Hohl- oder Vollkörper gebildete Leisten verschiedener Breiten, Höhen und Querschnitten oder als Formkörper, z.B. mit U-Form ausgeführt sein, deren Schenkel durch großflächiges Abstützen an den Klemmschienen eine sichere Fixierung mit gleichzeitigem Richteffekt für die so gebildeten Endstücke erbringen.

Als Formstücke können auch ein- oder beidseitig mit Querstreben versehene Leisten dienen, die in Verbindung mit beliebigen Endstücken eine Vielzahl Formkästen zum gleichzeitigen Ausformen einer entsprechenden Anzahl Spiel-

-/4

- 4 -

bauelemente ergeben. Auch könnnen die Formstücke durch
Rahmengestelle mit Erweiterungen oder Einziehungen gebildet sein, die gemeinsam mit Endstücken oder Formstükken entsprechend ihrer Gestaltung, z.B. Wandabschnitte mit
Tür- und/oder Fensteröffnungen, Tür- und Fensterstürze,
Giebelwände, Giebelwandteile od.dgl. mit der Vorrichtung
herzustellen erlauben.

Schließlich ist zur Stabilisierung der Bauelemente die
Verwendung von Armierungen vorgesehen. Hierzu können in
die Formkästen Gitter eingelegt sein, die zweckmäßig
mittels Ansätzen im Abstand auf der Grundplatte abgestützt sind.

Die Erfindung ist anhand von Ausführungsbeispielen in der
Zeichnung erläutert. Es zeigen:

Fig. 1  eine Grundplatte mit Klemmschienen und zwei
        Formstücken, in Draufsicht,

Fig. 2  ein Teilstück einer Grundplatte in Unteransicht,

Fig. 3  ein Teilstück einer Klemmschiene schmaler Ausbildung in Unteransicht,

Fig. 4  eine Klemmschiene der Fig. 3 in Rückansicht,

Fig. 5  Ein Teilstück einer Klemmschiene breiter Ausbildung in Unteransicht,

Fig. 6  eine Vorrichtung ohne Klemmschiene in Seitenansicht,

-/5

Fig. 7 eine Vorrichtung im Schnitt,

Fig. 8 ein Endstück in Seitenansicht,

Fig. 9 ein Endstück der Fig. 8 in Draufsicht,

Fig.10 ein Endstück anderer Ausbildung in Draufsicht,

Fig.11 ein Endstück der Fig. 10 in Seitenansicht,

Fig.12 ein Formstück in Draufsicht,

Fig.13 ein Formstück der Fig. 12 in Seitenansicht,

Fig.14 ein Formstück anderer Ausbildung in Draufsicht,

Fig.15 ein Formstück gemäß einer weiteren Ausbildung in Draufsicht.

Fig.16 ein weiteres Formstück in Draufsicht,

Fig.17 ein Formstück entsprechend einer weiteren Ausgestaltung,

Fig.18 ein Formstück zur Bildung mehrerer Formkästen in Draufsicht,

Fig.19 ein Formstück der Fig.18 in Seitenansicht,

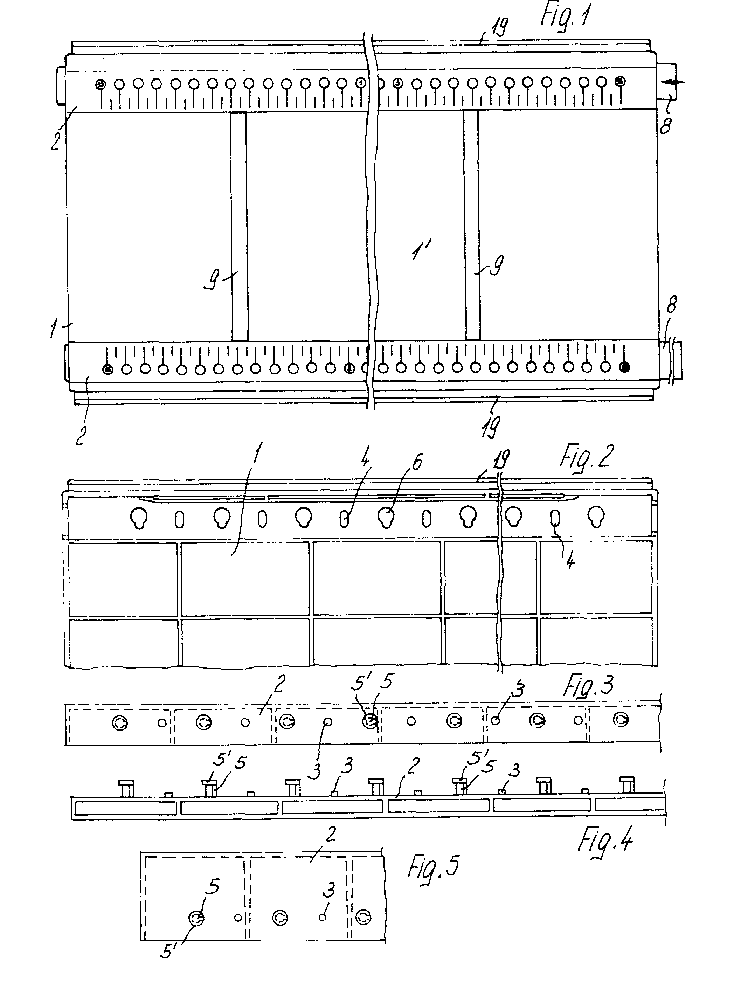

Fig.2o einen Kulissenschieber in Draufsicht,

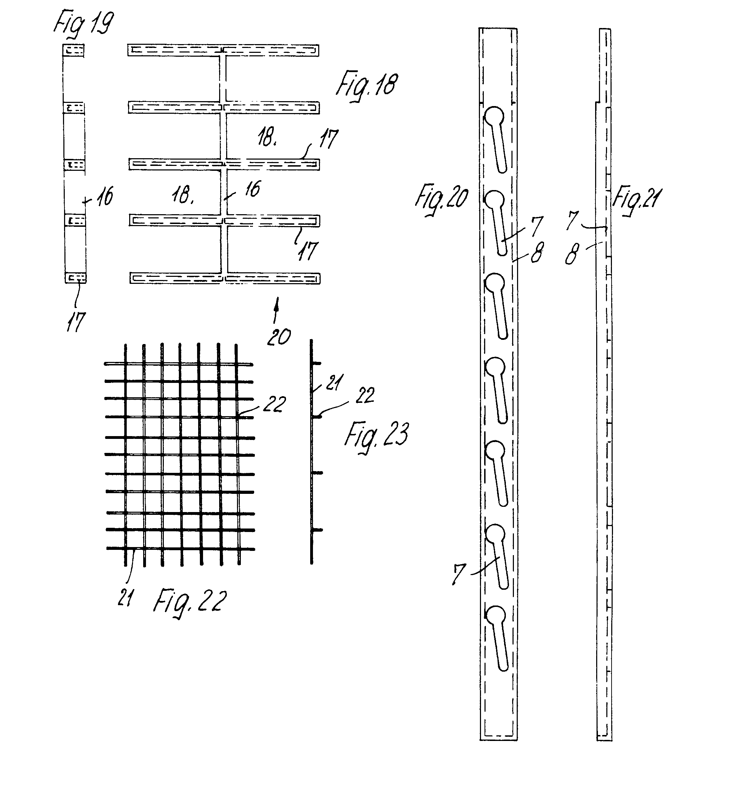

Fig.21 einen Kulissenschieber in Seitenansicht,

Fig.22 ein Armierungsgitter in Draufsicht und

Fig.23 ein Armierungsgitter in SEitenansicht.

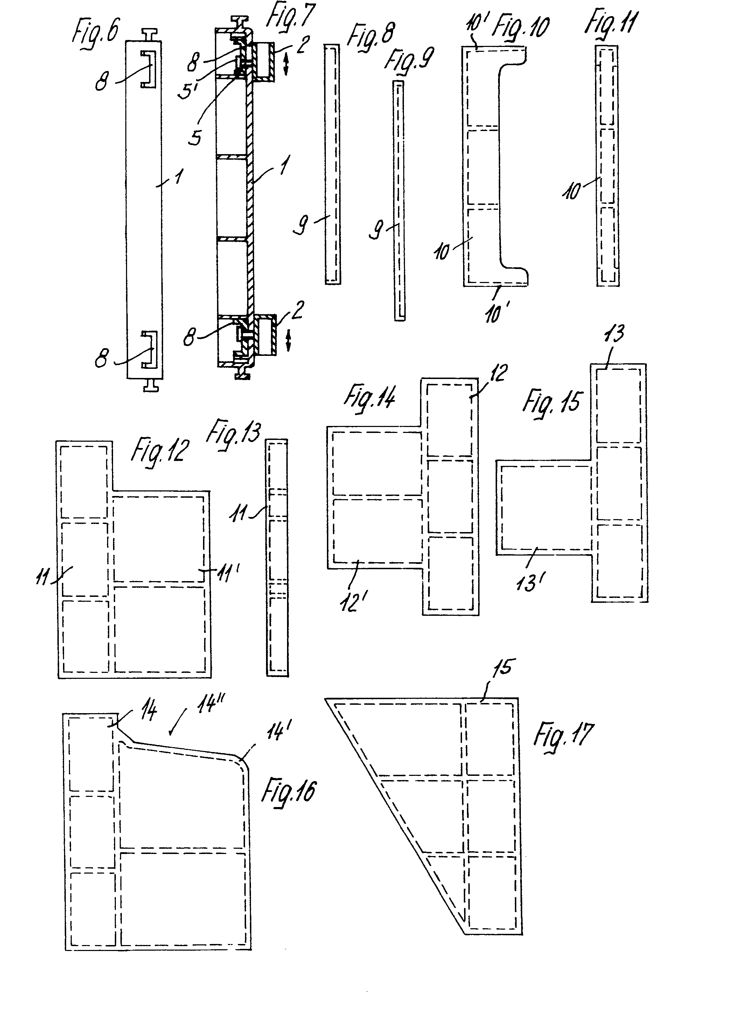

Bei der in Fig. 1, 2, 6 und 7 gezeigten Vorrichtung ist mit 1 eine insbesondere als Hohlkörper ausgebildete Grundplatte 1 aus einem Kunststoff bezeichnet. Auf der Grundplatte 1 sind parallel zueinander verschiebbar Klemmschienen 2 (Fig. 3, 4, 5) angeordnet, die mit Führungsstiften 3 in Lochungen 4 der Grundplatte 1 eingreifen und mittels Haltestiften 5 Lochungen 6 der Grundplatte 1 und Kulissennuten 7 von in der Grundplatte 1 geführten Kulissenschiebern 8 (Fig.20, 21) durchgreifen. Weiterhin untergreifen die Haltestifte 5 mit Verbreiterungen 5' die Begrenzungsflächen der Kulissennuten 7. Durch Längsbewegen der Kulissenschieber 8 gleiten die Haltestifte 5 in den schräg ausgebildeten Kulissennuten 7 und es erfolgen Querbewegungen der Klemmschienen 2. Zwischen den beiden Klemmschienen 2 sind auf der Grundplatte 1 leistenförmige Endstücke 9 (Fig. 8, 9) und/oder U-förmige Endstücke 10(Fig. 10, 11) frei auflegbar und mittels der Klemmschienen 2 auf der Grundplatte fixierbar. Die Klemmschienen 2 bilden gemeinsam mit den Endstücken 9 und/oder 10 und dem zwischen diesen sich erstreckenden Grundplattenabschnitt 1' einen Formkasten zum Ausformen von Spielbauelementen. Es versteht sich, daß mittels der Endstücke 9 und 10 Spielbauelemente mit geraden Seitenwänden erzielbar sind. Durch Abstützen der Schenkel 10' der Endstücke 10 an den Klemmschienen 2 erfolgt eine selbsttätige, beim Ausführungsbeispiel rechtwinkelige Ausrichtung der Endstücke 10 zu den Klemmschienen 2.

Zwischen den Klemmschienen 2 sind darüber hinaus auch Form-

- 7 -

stücke 11, 12, 13 (Fig. 12, 13, 14, 15) bzw. Formstücke 14 und 15 (Fig. 16, 17) auf der Grundplatte 1 auflegbar und durch die Klemmschienen 2 fixierbar. Die Formstücke 11 bis 15 sind als insbesondere einseitig abgedeckte Rahmengebilde ausgeführt und weisen seitliche Erweiterungen 11', 12', 13', 14' auf, die in Verbindung mit im Abstand aufgelegten Endstücken 9, 10, z.B. das Ausformen von Wandabschnitten mit Tür- bzw. Fensteröffnungen ermöglichen. Die Verwendung von Formstücken mit verschieden großen Erweiterungen 11', 12', 13', 14' ergibt dabei unterschiedlich große Fenster- und Türöffnungen.

Das Formstück 15 (Fig. 17) läßt die Bildung von Wandabschnitten mit schrägen Begrenzungsflächen, z.B. Giebelwänden und das Formstück 14 im Bereich der Einziehung '14'' die Ausformung von Tür- und Fensterstürzen als weitere Spielbauelemente zu. Gegebenenfalls zugeordnete Endstücke 9 oder 10 begrenzen die Formkästen für die Wandabschnitte bzw. Tür- und Fensterstürze.

In den Fig. 18, 19 ist ein durch eine Leiste 16 mit quer an dieser angreifenden Streben 17 gebildetes Formstück dargestellt, das in Verbindung mit Endstücken 9 oder 10 zwischen den Klemmschienen 2 einspannbar ist und gleichzeitig eine Anzahl Formkästen 18 zum Ausformen von quaderförmigen Bau-

-/8

- 8 -

elementen ergibt. Zur Erleichterung der Handhabung der
Vorrichtung sind an der Grundplatte 1 über die Umfangsfläche
derselben vorstehende Griffleisten 19 vorgesehen.

Zur Herstellung von Spielbauelementen sind zwischen den
Klemmschienen 2, z.B. Endstücke 9, 10 bzw. Formstücke 11
bis 15 oder 20 einzusetzen, wobei auch mehrere End- oder
Formstücke im Abstand voneinander zur gleichzeitigen Bildung einer Anzahl Formkästen 18 vorgesehen sein können.
Durch Anpressen der Klemmschienen 2 vermittels Längsbewegungen der Kulissenschieber 8 sind die End- oder Formstücke auf der Grundplatte 1 fixiert und der oder die so
gebildeten Formkästen umlaufend dicht verschlossen. Nach
Erhärtung oder Polymerisierung des in die Formkästen eingebrachten Werkstoffes sind durch Zurückbewegen der Kulissenschieber 8 die Klemmschienen 2 voneinander wegbewegbar und die Spielbauelemente sowie die End- und/oder
Formstücke von der Grundplatte 1 abnehmbar. Abgesehen davon, daß die Vorrichtung beliebige Spielbauelemente auszuformen ermöglicht, ist die Vorrichtung nach den Ausformvorgängen auch leicht zu reinigen. Es entspricht dem Wesen
der Erfindung, daß die Klemmschienen 2 auch in anderer
Weise, z.B. mittels an sich bekannter Klemmglieder oder
Rastenkörper an der Grundplatte 1 freigebbar zu fixieren
sind.

elementen ergibt. Zur Erleichterung der Handhabung der Vorrichtung sind an der Grundplatte 1 über die Umfangsfläche derselben vorstehende Griffleisten 19 vorgesehen.

Zur Herstellung von Spielbauelementen sind zwischen den Klemmschienen 2, z.B. Endstücke 9, 10 bzw. Formstücke 11 bis 15 oder 20 einzusetzen, wobei auch mehrere End- oder Formstücke im Abstand voneinander zur gleichzeitigen Bildung einer Anzahl Formkästen 18 vorgesehen sein können. Durch Anpressen der Klemmschienen 2 vermittels Längsbewegungen der Kulissenschieber 8 sind die End- oder Formstücke auf der Grundplatte 1 fixiert und der oder die so gebildeten Formkästen umlaufend dicht verschlossen. Nach Erhärtung oder Polymerisierung des in die Formkästen eingebrachten Werkstoffes sind durch Zurückbewegen der Kulissenschieber 8 die Klemmschienen 2 voneinander wegbewegbar und die Spielbauelemente sowie die End- und/oder Formstücke von der Grundplatte 1 abnehmbar. Abgesehen davon, daß die Vorrichtung beliebige Spielbauelemente auszuformen ermöglicht, ist die Vorrichtung nach den Ausformvorgängen auch leicht zu reinigen. Es entspricht dem Wesen der Erfindung, daß die Klemmschienen 2 auch in anderer Weise, z.B. mittels an sich bekannter Klemmglieder oder Rastenkörper an der Grundplatte 1 freigebbar zu fixieren sind.

Schließlich ist es auch denkbar, die Klemmschienen 2 sowie die End- und Formstücke an der Grundplatte 1 einfach mittels, z.B. in Lochungen derselben eingreifenden Haltestiften festzulegen.

Die Stabilität der Spielbauelemente läßt sich noch durch Einbringen eines Armierungsgitters 21 (Fig. 22, 23) in die Formkästen verbessern. Damit das Armierungsgitter 21 sicher von Werkstoff umschlossen wird, kann das Armierungsgitter 21 durch, z.B. stiftförmige Ansätze 22 im Abstand auf der Grundplatte abgestützt sein.

**M. GÖBEL**
PATENT- U. ZIV.-INGENIEUR

**8501 PYRBAUM-PRUPPACH**
PRUPPACHER HAUPTSTRASSE 5-7
TELEFON 091802 / 675

BANKKONTEN:
VOLKSBANK NÜRNBERG 45 2 33 BLZ 760 900 00
COMMERZBANK NÜRNBERG 8 300 907 BLZ 760 400 61

DiDi Spielwaren GmbH, D 8430 Neumarkt/Opf.

Patentansprüche

1. Vorrichtung zum Ausformen von Spielbauelementen aus erhärt- oder polymerisierbaren Werkstoffen für Bauspiele, gekennzeichnet durch eine Grundplatte (1) mit auf dieser verstellbar fest, im Abstand parallel zueinander angeordneten Klemmschienen (2) und zwischen diesen auf der Grundplatte (1) frei aufgelegten End- (9, 10) oder Formstücken (11, 12, 13, 14, 15, 20), die durch die Klemmschienen (2) auf der Grundplatte (1) freigebbar fixiert sind.

2. Vorrichtung nach Anspruch 1, dadurch gekennzeichnet, daß die Klemmschienen (2) durch an der Grundplatte (1) geführte Kulissenschieber (8) auf der Grundplatte (1) verstell- und feststellbar sind.

3. Vorrichtung nach Anspruch 1, dadurch gekennzeichnet, daß die Klemmschienen (2) mit klemmschienenfesten Halte- (5) und Führungsstiften (3) in Lochungen (6 bzw. 4) der Grundplatte (1) eingreifen und daß die Haltestifte (5)

-/2

die Kulissennut (7) der Kulissenschieber (8) durchgreifen und mit Verbreiterungen (5') die Begrenzungsflächen der Kulissennuten (7) untergreifen.

4. Vorrichtung nach Anspruch 1, dadurch gekennzeichnet, daß die Klemmschienen (2) durch Rastenkörper an der Grundplatte (1) festlegbar sind.

5. Vorrichtung nach Anspruch 1, dadurch gekennzeichnet, daß die Klemmschienen (2) an der Grundplatte (1) durch Klemmglieder feststellbar angeordnet sind.

6. Vorrichtung nach den Ansprüchen 1 bis 5, gekennzeichnet durch die Anordnung austauschbarer Klemmschienen (2) mit verschieden großen Breiten und/oder Höhen.

7. Vorrichtung nach Anspruch 1, dadurch gekennzeichnet, daß die Grundplatte (1) durch einen ebenen Vollkörper oder einen unterseitig offenen Hohlkörper gebildet ist.

8. Vorrichtung nach Anspruch 7, dadurch gekennzeichnet, daß die Grundplatte (1) über die Umfangsfläche derselben vorstehende Griffe oder Griffleisten (19) aufweist.

-/3

9. Vorrichtung nach Anspruch 1, dadurch gekennzeichnet, daß die Endstücke (9) durch als Hohl- oder Vollkörper ausgebildete Leisten mit verschiedenen Breiten, Höhen und Querschnitten gebildet sind.

10. Vorrichtung nach Anspruch 1, dadurch gekennzeichnet, daß als Endstücke (10) im wesentlichen U-förmige Formkörper dienen.

11. Vorrichtung nach Anspruch 1, dadurch gekennzeichnet, daß das Formstück (20) durch eine ein- oder beidseitig mit im Abstand mit Querstreben (17) versehene Leiste (16) gebildet ist.

12. Vorrichtung nach Anspruch 1, dadurch gekennzeichnet, daß als Formstücke (11, 12, 13, 14, 15) Rahmengestelle mit Fenster- oder Türöffnungen, Fenster oder Türstürze, Wände oder Wandabschnitte bildende Erweiterungen (11', 12', 13', 14') oder Einziehungen (14'') dienen.

13. Vorrichtung nach Anspruch 1, dadurch gekennzeichnet, daß zwischen den Klemmschienen (2) und den End- (9, 10) oder Formstücken (11, 12, 13, 14, 15, 20) Armierungsgitter (21) auf der Grundplatte (1) angeordnet sind.

- 4 -

14. Vorrichtung nach Anspruch 13, dadurch gekennzeichnet, daß die Armierungsgitter (21) mittels Ansätzen (22) im Abstand auf der Grundplatte (1) abgestützt sind.

Fig.1

Fig.2

Fig.3

Fig.4

Fig.5

Fig.6  Fig.7  Fig.8  Fig.9  Fig.10  Fig.11

Fig.12  Fig.13  Fig.14  Fig.15

Fig.16  Fig.17

Fig 19

Fig. 18

Fig. 20

Fig. 21

Fig. 22

Fig. 23

0030247

-3/3-

| | Europäisches Patentamt | **EUROPÄISCHER RECHERCHENBERICHT** | Nummer der Anmeldung<br>EP 79 10 5018 |
|---|---|---|---|

| | **EINSCHLÄGIGE DOKUMENTE** | | **KLASSIFIKATION DER ANMELDUNG (Int.Cl. ³)** |
|---|---|---|---|
| Kategorie | Kennzeichnung des Dokuments mit Angabe, soweit erforderlich, der maßgeblichen Teile | betrifft Anspruch | |
| X | DE - C - 186 299 (STOLTE)<br>* Figuren * | 1,7 | B 29 C 1/16<br>B 28 B 7/02<br>A 63 H 33/00 |
| | -- | | |
| XE | DE - A - 2 832 295 (DENNERT)<br>* Figuren * | 1,7 | |
| | -- | | |
| | FR - A - 2 416 102 (LEMBERT)<br>* Das ganze Dokument * | 1,6-9,<br>11-14 | **RECHERCHIERTE SACHGEBIETE (Int. Cl. ³)** |
| | -- | | |
| | FR - A - 2 184 316 (SPANDECK)<br>* Figuren 6,7 * | 1-3 | B 29 C<br>B 28 B<br>A 63 H |
| | -- | | |
| | DE - B - 1 164 912 (UHRICH)<br>* Figuren; Spalte 2, Zeile 40 bis Spalte 3, Zeile 15 * | 1,2 | |
| | -- | | |
| | FR - A - 776 534 (CHEOPS)<br>* Figuren 2a,b,c * | 9,10 | |
| | -- | | **KATEGORIE DER GENANNTEN DOKUMENTE** |
| | GB - A - 1 003 047 (KROG)<br>* Figuren 1-7 * | 4,5,12<br>13 | X: von besonderer Bedeutung<br>A: technologischer Hintergrund<br>O: nichtschriftliche Offenbarung<br>P: Zwischenliteratur<br>T: der Erfindung zugrunde |
| | -- | | liegende Theorien oder<br>Grundsätze |
| | DE - C - 858 656 (BAECHLER)<br>* Figuren * | 12 | E: kollidierende Anmeldung<br>D: in der Anmeldung angeführtes<br>Dokument<br>L: aus andern Gründen |
| | -- | | angeführtes Dokument |
| | US - A - 3 195 207 (FOUGEA)  ./. | 6-14 | &: Mitglied der gleichen Patent-<br>familie, übereinstimmendes<br>Dokument |

| X | Der vorliegende Recherchenbericht wurde für alle Patentansprüche erstellt. | | |
|---|---|---|---|
| Recherchenort | Abschlußdatum der Recherche | Prüfer | |
| Den Haag | 08-08-1980 | CORDENIER | |

EPA form 1503.1   06.78

0030247

| Kategorie | Kennzeichnung des Dokuments mit Angabe, soweit erforderlich, der maßgeblichen Teile | betrifft Anspruch |
|---|---|---|
| | * Figuren; Spalte 1, Zeilen 12-14; Spalte 2, Zeilen 56-65 * | |
| | -- | |
| | US - A - 4 159 100 (LANDOWSKI)  * Figuren * | 1,4-7 |
| | -- | |
| | GB - A - 240 428 (AKERS)  * Figuren * | 5 |
| | -- | |
| | DE - C - 264 104 (LINDENTHAL)  * Figuren * | 1 |
| | -- | |
| | GB - A - 1 343 405 (FOSTER)  * Figuren * | 3 |
| | -- | |
| A | GB - A - 190 637 (MINNICK) | 1 |
| A | FR - A - 2 382 253 (ROLLIN) | 1 |
| | ---- | |

**EINSCHLÄGIGE DOKUMENTE**

KLASSIFIKATION DER ANMELDUNG (Int.Cl. 3)

RECHERCHIERTE SACHGEBIETE (Int. Cl. 3)

EPA Form 1503.2  06.78